(19) **Europäisches Patentamt**

**European Patent Office**

**Office européen des brevets**

(11) **EP 1 201 079 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(21) Anmeldenummer: **01945191.3**

(22) Anmeldetag: **25.05.2001**

(51) Int Cl.:
**H04N 5/262** *(2006.01)*    **H04N 3/233** *(2006.01)*

(86) Internationale Anmeldenummer:
**PCT/EP2001/005987**

(87) Internationale Veröffentlichungsnummer:
**WO 2001/093569 (06.12.2001 Gazette 2001/49)**

(54) **VERFAHREN UND VORRICHTUNG ZUR PHASENKORREKTUR EINES VERTIKAL VERZERRTEN DIGITALEN BILDS**

METHOD AND DEVICE FOR PHASE CORRECTION OF A VERTICALLY DISTORTED DIGITAL IMAGE

PROCEDE ET DISPOSITIF DESTINES A LA CORRECTION DE PHASE D'UNE IMAGE NUMERIQUE A DISTORSION VERTICALE

(84) Benannte Vertragsstaaten:
**DE FR GB IT NL**

(30) Priorität: **30.05.2000 DE 10026739**

(43) Veröffentlichungstag der Anmeldung:
**02.05.2002 Patentblatt 2002/18**

(73) Patentinhaber: **Micronas GmbH**
**79108 Freiburg i. Br. (DE)**

(72) Erfinder:
• **HAHN, Marko**
**15370 Petershagen (DE)**

• **SCHEFFLER, Günter**
**80939 Muenchen (DE)**
• **WENDEL, Dirk**
**82008 Muenchen (DE)**

(74) Vertreter: **Bickel, Michael**
**Westphal & Partner**
**Mozartstrasse 8**
**80336 München (DE)**

(56) Entgegenhaltungen:
**EP-A- 0 711 071        US-A- 5 089 893**
**US-A- 5 283 651**

**Beschreibung**

Die vorliegende Erfindung betrifft ein Verfahren nach dem Oberbegriff des Anspruches 1 sowie eine Vorrichtung nach dem Oberbegriff des Anspruches 5 zur Phasenkorrektur eines vertikal verzerrten digitalen Bilds, insbesondere eines digitalen Fernsehbilds.

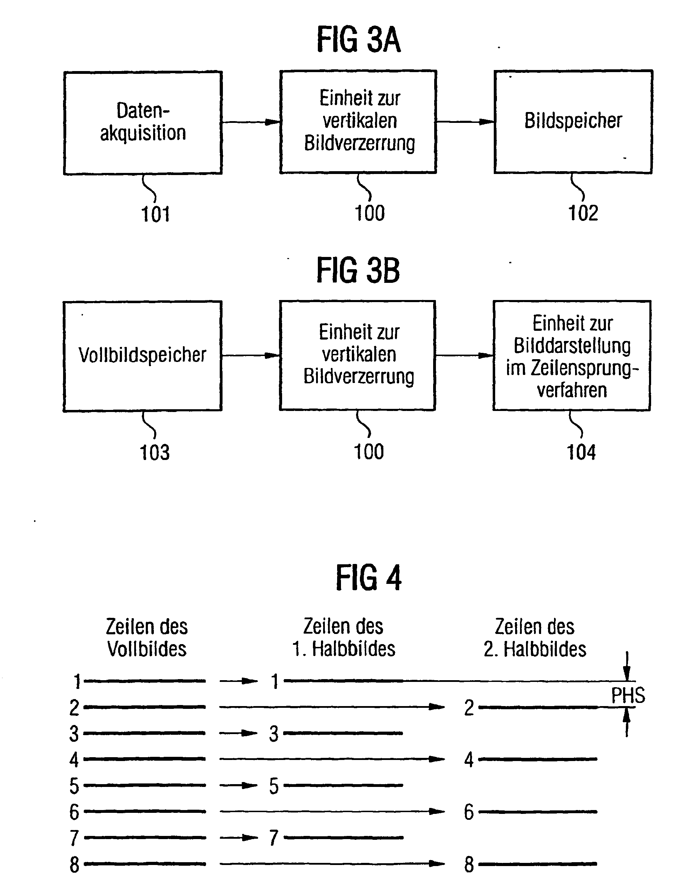

Die Darstellung von Bildern auf heute üblichen Systemen der Fernsehtechnik erfolgt im so genannten Zeilensprungverfahren. Wie in Fig. 4 gezeigt ist, ist das Zeilensprungverfahren dadurch charakterisiert, dass ein darzustellendes Bild (Vollbild) in Zeilen zerlegt wird, wobei die Zeilen dieses Vollbildes auf zwei zeitlich aufeinander folgende Halbbilder aufgeteilt werden. Die Zeilen mit ursprünglich ungerader Zeilennummer werden im ersten Halbbild und die Zeilen mit ursprünglich gerader Zeilennummer im zweiten Halbbild dargestellt. Der Standard für die Bilddarstellung ist in der Richtlinie ITU-R 601 festgelegt.

Wie aus der Darstellung von Fig. 4 ersichtlich ist, ist die Anzahl der Zeilen der beiden Halbbilder jeweils halb so groß wie die Anzahl der Zeilen des Vollbilds. Für das Zeilensprungverfahren kann ein so genannter vertikaler Dezimationsfaktor (VDEC) definiert werden, welcher dem Verhältnis zwischen der Zeilenanzahl des Vollbilds und der Zeilenanzahl der Halbbilder entspricht. Der vertikale Dezimationsfaktor beträgt bei dem in Fig. 4 gezeigten Beispiel somit 2.

Aus der Darstellung von Fig. 4 wird zudem deutlich, dass zwischen den Zeilen des ersten Halbbilds und denen des zweiten Halbbilds ein Phasenoffset PHS besteht, der eine Zeile beträgt. Im Allgemeinen berechnet sich der Phasenoffset wie folgt:

$$(1) \quad PHS = \frac{VDEC}{2}$$

Dieser Phasenoffset muss zu Beginn bei der Generierung des zweiten Bildes berücksichtigt werden.

Bei der vorhergehenden Beschreibung wurde von einem über das gesamte Vollbild bzw. das gesamte Halbbild konstanten vertikalen Dezimationsfaktor VDEC ausgegangen. Für bestimmte Anwendungen bzw. für die Darstellung bestimmter Effekte kann jedoch die Erzeugung von digitalen Bildern im Zeilensprungverfahren mit einer sich in Abhängigkeit von der vertikalen Position verändernden vertikalen Verzerrung gewünscht sein. So wird beispielsweise zur Expansion bzw. Kompression eines Bildes oder zur Darstellung eines vertikalen Panorama-Effekts eine Veränderung des vertikalen Dezimationsfaktors bzw. Expansionsfaktors über das Bild verlangt, wodurch der vertikale Dezimationsfaktor VDEC zu einer Funktion der Zeile des Halbbilds wird, d.h. VDEC = VDEC (1), wobei 1 die jeweilige Zeile des Halbbilds bezeichnet. Ebenso ist zur Darstellung weiterer Effekte denkbar, den vertikalen Dezimationsfaktor auch von anderen Parametern, wie beispielsweise der Pixel-Position etc., abhängig zu machen. Zur Berechnung eines Phasenkorrektursignals für das zweite Halbbild zur Berücksichtigung des Phasenoffsets zwischen dem zweiten Halbbild und dem ersten Halbbild ist jedoch lediglich die Abhängigkeit des vertikalen Dezimationsfaktors VDEC von der Zeile relevant. Für den Phasenoffset gilt somit:

$$(2) \quad PHS(l) = \frac{VDEC(l)}{2}$$

Die Durchführung einer Phasenkorrektur für das zweite Halbbild ist erforderlich, da es ansonsten im Verlauf des Bildes in vertikaler Richtung zu einer ungewünschten und als störend empfundenen Bildverzerrung kommt..

Der vorliegenden Erfindung liegt nunmehr die Aufgabe zugrunde, ein Verfahren sowie eine entsprechende Vorrichtung vorzuschlagen, um mit möglichst geringem Aufwand in vertikaler Richtung verzerrte Halbbilder erzeugen zu können. Insbesondere soll das Phasenkorrektursignal für das zweite Halbbild bei der Erzeugung von digitalen Bildern im Zeilensprungverfahren im Falle einer sich in Abhängigkeit von der vertikalen Position verändernden vertikalen Verzerrung möglichst einfach erzeugt werden können.

Dieser Aufgabe wird erfindungsgemäß durch ein Verfahren mit den Merkmalen des Anspruches 1 bzw. einer Vorrichtung mit den Merkmalen des Anspruchs 5 gelöst. Die Unteransprüche definieren jeweils bevorzugte und vorteilhafte Ausführungsformen der vorliegenden Erfindung.

Erfindungsgemäß wird der Phasenkorrekturwert bzw. das Phasenkorrektursignal für das zweite Halbbild aus einem Signal abgeleitet, welches eine Information über die Veränderung des so genannten vertikalen Dezimationsfaktors in vertikaler Richtung des digitalen Bilds bzw. des zweiten digitalen Halbbilds enthält. Verändert sich der vertikale Dezimationsfaktor zeilenabhängig, wird entsprechend der Phasenkorrekturwert bzw. das Phasenkorrektursignal für jede einzelne Zeile des zweiten Halbbilds neu ermittelt.

Der Phasenkorrekturwert vphscor kann insbesondere gemäß folgender Beziehung ermittelt werden, wobei vinc(1) das vertikale Inkrement des vertikalen Dezimationsfaktors, d.h. die Veränderung des vertikalen Dezimationsfaktors in vertikaler Richtung, bezeichnet:

$$(3) \quad vphscor(l) = \frac{1}{2} \cdot vinc(l)$$

Die gesamte zur Phasenkorrektur benötigte Schaltung kann aus lediglich zwei rückgekoppelten Addierern, einem Begrenzer, einem Multiplexer und einem zusätzlichen Addierer aufgebaut werden.

Die vorliegende Erfindung lässt sich allgemein auf dem Gebiet der digitalen Bildverarbeitung, insbesondere auf dem Gebiet der digitalen Fernsehtechnik, einsetzen. Eine auf der vorliegenden Erfindung beruhende Einheit zur Bildverarbeitung mit vertikaler Bildverzerrung im Zeilensprungverfahren kann sowohl vor als auch nach einem entsprechenden Bildspeicher angeordnet sein, d.h. das der vorliegenden Erfindung zugrunde liegende Prinzip lässt sich allgemein für eine vertikale Verzerrung vor oder nach einem Bildspeicher anwenden.

Die vorliegende Erfindung wird nachfolgend unter Bezugnahme auf die beigefügte Zeichnung anhand bevorzugter Ausführungsbeispiele näher erläutert.

Fig. 1 zeigt ein vereinfachtes Blockschaltbild einer gemäß der vorliegenden Erfindung aufgebauten Einheit zur vertikalen Bildverzerrung,

Fig. 2 zeigt eine detaillierte Darstellung des zur Erzeugung eines Phasenkorrektursignals in Fig. 1 beitragenden Schaltungsteils gemäß einem bevorzugten Ausführungsbeispiel der vorliegenden Erfindung,

Fig. 3A bzw. 3B zeigt allgemein die Anordnung der in Fig. 1 gezeigten Einheit vor bzw. nach einem Bildspeicher, und

Fig. 4 zeigt eine Darstellung zur Erläuterung der Zerlegung eines Vollbilds in die Zeilen zweier Halbbilder beim so genannten Zeilensprungverfahren.

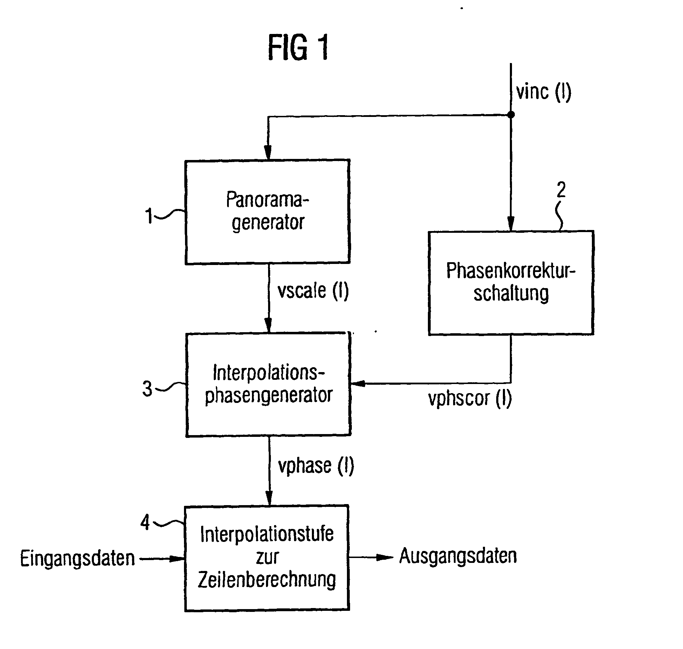

Die in Fig. 1 gezeigte Einheit zur vertikalen Bildverzerrung umfasst einen nachfolgend als Panoramagenerator bezeichneten Schaltungsabschnitt 1, einen nachfolgend als Phasenkorrekturschaltung bezeichneten Schaltungsabschnitt 2 und einen nachfolgend als Interpolationsphasengenerator bezeichneten Schaltungsabschnitt 3. Die Schaltungsabschnitte 1 - 3 dienen in Kombination zur Erzeugung eines Phasenkorrektursignals vphase(1) für das zweite Halbbild eines digitalen Vollbilds, dessen Eingangsdaten einer Interpolationsstufe 4.zugeführt werden. Die Interpolationsstufe 4 berechnet in Abhängigkeit von dem Phasenkorrektursignal vphase(1), welches auch als vertikale Interpolationsphase bezeichnet werden kann, zu den digitalen Bilddaten eines digitalen Vollbilds die dezimierten Bildzeilen gemäß dem jeweils augenblicklichen Wert des so genannten vertikalen Dezimationsfaktors VDEC(1) und gibt die diesen dezimierten Bildzeilen der beiden Halbbilder des digitalen Vollbilds entsprechenden Bilddaten in Form von Ausgangsdaten aus.

Die von dem Interpolationsphasengenerator 3 erzeugte vertikale Interpolationsphase vphase(1) bezeichnet die Gewichtung zwischen zwei Originalzeilen des digitalen Vollbilds und dient als Grundlage für die Interpolationsstufe 4, um die dezimierten Bildzeilen der beiden digitalen Halbbilder bzw. die entsprechenden digitalen Bilddaten berechnen zu können. Die Berechnung der vertikalen Interpolationsphase vphase(1) durch den Interpolationsphasengenerator 3 erfolgt in Abhängigkeit von einem vertikalen Skalierfaktor vscale(1), welcher von dem Panoramagenerator 1 erzeugt wird, sowie einem vertikalen Phasenkorrekturwert vphscor(l), welcher von der Phasenkorrekturschaltung 2 erzeugt wird. Der vertikale Skalierfaktor vscale(1) ist ein Maß für den vertikalen Dezimationsfaktor VDEC(1). Sowohl dem Panoramagenerator 1 als auch der Phasenkorrekturschaltung 2 wird als Eingangssignal ein vertikales Inkrement vinc(1) zugeführt, welches die Änderung des vertikalen Dezimationsfaktors beschreibt, d.h. vinc(1) = 0 bei $\Delta$VDEC(1) = 0. Die Werte bzw. Signale vinc(1), vscale(1), vphscor(1) und vphase(1) sind j.eweils eine Funktion der Zeile 1 des digitalen Vollbilds bzw. des jeweils betrachteten zweiten digitalen Halbbilds.

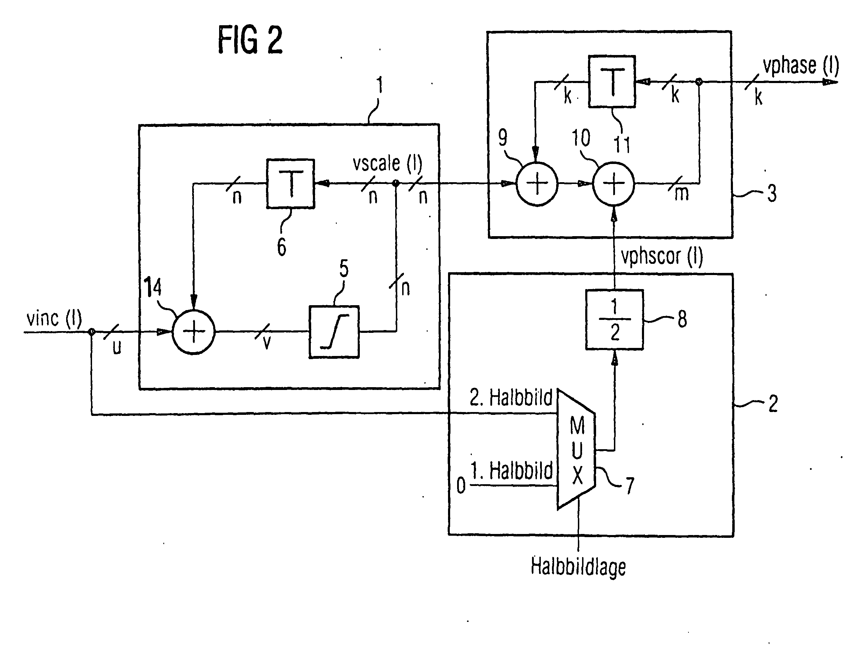

Nachfolgend soll der Aufbau der einzelnen in Fig. 1 gezeigten Schaltungsabschnitte 1 - 3 unter Bezugnahme auf Fig. 2 näher erläutert werden.

Wie aus Fig. 2 ersichtlich ist, besteht der Interpolationsphasengenerator 3 im Prinzip aus einem über ein Register 11 rückgekoppelten Addierer 9. Die Bezugzeichen k, m bezeichnen jeweils die Bitbreite der innerhalb des Interpolationsphasengenerators 3 übertragenen Datenwörter. Zudem weist der Interpolationsphasengenerator 3 einen in seinem Rückkopplungspfad angeordneten Addierer 10 auf, mit dessen Hilfe der Ausgangswert des Addierers 9 mit dem vertikalen Phasenkorrekturwert vphscor(l) der Phasenkorrekturschaltung 2 addiert wird.

Ohne Berücksichtigung dieses vertikalen Phasenkorrekturwerts vphscor(1) ist der vertikale Dezimationsfaktor VDEC(1) in Abhängigkeit von dem vertikalen Skalierfaktor vscale(1) des Interpolationsphasengenerators 3 wie folgt definiert:

$$(4) \quad VDEC(l) = \frac{2^k + vscale(l)}{vscale(l)}$$

Ähnlich wie bei der Phasenkorrektur für das zweite Halbbild bei einem konstanten vertikalen Dezimationsfaktor muss auch bei einem variablen vertikalen Dezimationsfaktor die Phasenkorrektur für jeden neuen Wert der vertikalen Interpolationsphase vphase(1) durchgeführt werden. Der Phasenkorrekturwert berechnet sich dabei wie folgt:

$$(5) \quad vphscor(l) = \frac{1}{2} \cdot \frac{d}{dl} VDEC(l)$$

Es ergibt sich somit:

$$(6) \quad vphscor(l) = \frac{1}{2} \cdot \frac{d}{dl} vscale(l)$$

Dabei gilt die Vereinbarung VDEC(1) = vscale(1). Durch eine mathematische Vereinfachung bzw. Annäherung ergibt sich:

$$(7) \quad vphscor(l) = \frac{1}{2} \cdot \Delta vscale(l)$$

Wird nunmehr das vertikale Inkrement wie bereits beschrieben durch die Änderung des vertikalen Skalierfaktors bzw. des vertikalen Dezimationsfaktors beschrieben, d.h. gilt:

$$(8) \quad vinc(l) = \Delta vscale(l),$$

kann der Phasenkorrekturwert wie folgt direkt aus dem vertikalen Inkrement abgeleitet werden:

$$(9) \quad vphscor(l) = \frac{1}{2} \cdot vinc(l)$$

Das Phasenkorrektursignal vphscor(1) für das zweite Halbbild kann somit direkt aus dem Inkrement vinc(1), welches als Grundlage für den vertikalen Skalierfaktor vscale(1) dient, abgeleitet werden. Das Signal des vertikalen Skalierfaktors vscale(1) dient seinerseits als Steuersignal für die Erzeugung der Phaseninformation vphase(1) für die Interpolation durch die Interpolationsstufe 4.
Wegen der obigen Beziehung (8) gilt folgender Zusammenhang:

$$(10) \quad vscale(l) = vscale(l-1) + vinc(l)$$

oder

$$(11) \quad vinc(l) = vscale(l) - vscale(l-1)$$

Für den Panoramagenerator 1, welcher den vertikalen Skalierfaktor vscale(1) erzeugt, ergibt sich somit der in Fig. 2 gezeigte Aufbau eines Akkumulators, welcher im Prinzip durch einen über ein Register (6) rückgekoppelten Addierer 14 gebildet ist. Zusätzlich ist ein Bereichsbegrenzer oder Limiter in den Rückkopplungspfad eingefügt, um einen Überlauf des Registers 6 zu verhindern. Die Bezugszeichen n, u bzw. v bezeichnen wiederum die Wortbreite der jeweils übertragenen Datenwörter.

Der vertikale Phasenkorrekturwert vphscor(1) lässt sich wie in Fig. 2 gezeigt durch die Kombination eines Multiplexers 7 mit einem Bewerter 8 und die Hinzufügung des bereits erläuterten Addierers 10 zu dem Phasengenerator 3 realisieren. Dem Multiplexer 7 ist kontinuierlich eine Information über die jeweils augenblickliche Halbbildlage, d.h. über das jeweils augenblicklich zu verarbeitende Halbbild, zugeführt. Handelt es sich augenblicklich um das erste Halbbild, ist der dem Interpolationsphasengenerator 3 hinzugefügte Addierer 10 wirkungslos, da der Multiplexer 7 den Wert "0" ausgibt. Für das zweite Halbbild wird hingegen über den Multiplexer 7 und den Bewerter 8 der Wert vinc(1)/2 dem Addierer 10 zugeführt. Zu jedem von dem Addierer 9 des Interpolationsphasengenerators 3 berechneten Phasenwert wird somit die Hälfte des vertikalen Inkrementwerts vinc(1) hinzuaddiert, um den endgültigen Phasenwert vphase(1) zu erhalten. Der Bewerter 8 kann einfach durch eine Bitverschiebeoperation, d.h. durch Verschiebung der Bits des Datenworts vinc(1) um eine Stelle nach rechts bzw. zu dem niederwertigsten Bit hin, realisiert sein.

Auf diese Weise lässt sich die Phasenkorrektur des zweiten Halbbilds durch eine äußerst einfach aufgebaute Schaltung realisieren.

Wie aus den Darstellungen von Fig. 3A und Fig. 3B entnommen werden kann, kann die erfindungsgemäße Einheit zur vertikalen Bildverzerrung sowohl vor als auch hinter einem Bildspeicher angeordnet sein. Fig. 3A zeigt eine allgemeine Darstellung einer erfindungsgemäßen Einheit 100 zur vertikalen Bildverzerrung im Zeilensprungverfahren im Akquisitionspfad einer Anordnung zur digitalen Videosignalverarbeitung, wobei die erfindungsgemäße Einheit 100 zur vertikalen Bildverzerrung hinter einem Datenakquisitionsabschnitt 101 und vor einem Bildspeicher 102 angeordnet ist. Fig. 3 zeigt eine allgemeine Darstellung der Anordnung einer erfindungsgemäßen Einheit 100 zur vertikalen Bildverzerrung im Zeilensprungverfahren im Darstellungspfad einer Anordnung zur digitalen Videosignalverarbeitung, wobei die erfindungsgemäße Einheit 100 zur vertikalen Bildverzerrung nach einem Vollbildspeicher 103 und vor einer Einheit 104, welche zur Bilddarstellung im Zeilensprungverfahren dient, angeordnet ist.

**Patentansprüche**

1. Verfahren zur vertikalen Phasenkorrektur eines vertikal verzerrten digitalen Bildes,
   wobei die Zeilen des digitalen Bildes gemäß einem sich in vertikaler Richtung des digitalen Bildes verändernden Abbildungsfaktor (vscale) einem ersten Halbbild und einem zweiten Halbbild zugeordnet werden, wobei die Zeilen des ersten Halbbilds und die Zeilen des zweiten Halbbilds zeitlich aufeinander folgend darzustellen sind, und
   wobei für das zweite Halbbild in Abhängigkeit von der jeweiligen vertikalen Position in dem zweiten Halbbild ein vertikaler Phasenkorrekturwert (vphscor) erzeugt wird, der bei der Generierung des zweiten Halbbilds aus dem digitalen Bild zu berücksichtigen ist,
   **dadurch gekennzeichnet,**
   **dass** der vertikale Phasenkorrekturwert (vphscor) für das zweite Halbbild aus einer Information (vinc) über die Veränderung des Abbildungsfaktors (vscale) in vertikaler Richtung des digitalen Bilds abgeleitet wird.

2. Verfahren nach Anspruch 1,
   **dadurch gekennzeichnet,**
   **dass** sich der Abbildungsfaktor (vscale) zeilenabhängig in vertikaler Richtung des digitalen Bilds verändert, und
   **dass** der vertikale Phasenkorrekturwert (vphscor) für jede Zeile des zweiten Halbbilds neu ermittelt wird.

3. Verfahren nach Anspruch 1 oder 2,
   **dadurch gekennzeichnet,**

**dass** der vertikale Phasenkorrekturwert (vphscor) für das Halbbild in Abhängigkeit von dem Wert (vinc), welcher die vertikale Veränderung des Abbildungsfaktors (vscale) in vertikaler Richtung des digitalen Bilds beschreibt, wie folgt ermittelt wird: vphscor = ½ · vinc.

**4.** Verfahren nach einem der Ansprüche 1 - 3,
**dadurch gekennzeichnet,**
**dass** das Verfahren zur Phasenkorrektur eines vertikal verzerrten digitalen Videobilds, insbesondere eines digitalen Fernsehbilds, angewendet wird.

**5.** Vorrichtung zur vertikalen Phasenkorrektur eines vertikal verzerrten digitalen Bilds,
mit einer Interpolationsstufe (4), welcher Bilddaten eines digitalen Bilds zugeführt sind, zur Zuordnung der Zeilen des digitalen Bilds gemäß einem sich in vertikaler Richtung des digitalen Bilds verändernden Abbildungsfaktor (vscale) zu einem ersten Halbbild und einem zweiten Halbbild, wobei die Zeilen des ersten Halbbilds und die Zeilen des zweiten Halbbilds zeitlich aufeinander folgend darzustellen sind, und
mit Phasenkorrekturmitteln (1-3) zur Erzeugung eines Phasenkorrektursignals (vphase) für die Interpolationsstufe (4), wobei das Phasenkorrektursignal (vphase) von der jeweiligen vertikalen Position in dem zweiten Halbbild abhängig ist und von der Interpolationsstufe (4) bei der Generierung des zweiten Halbbilds zu berücksichtigen ist,
**dadurch gekennzeichnet,**
**dass** die Phasenkorrekturmittel (1-3) derart ausgestaltet sind, dass sie das Phasenkorrektursignal (vphase) für das zweite Halbbild aus einem Inkrementsignal (vinc) ableiten, welches die Veränderung des Abbildungsfaktors (vscale) in vertikaler Richtung des digitalen Bilds beschreibt.

**6.** Vorrichtung nach Anspruch 5,
**dadurch gekennzeichnet,**
**dass** sich der Abbildungsfaktor (vscale) zeilenabhängig in vertikaler Richtung des digitalen Bilds verändert, und
**dass** die Phasenkorrekturmittel (1-3) dazu ausgestaltet sind, das Phasenkorrektursignal (vphasc) neu für jede Zeile des zweiten Halbbilds zu erzeugen.

**7.** Vorrichtung nach Anspruch 5 oder 6,
**dadurch gekennzeichnet,**
**dass** die Phasenkorrekturmittel einen ersten Schaltungsabschnitt (1) zur Erzeugung eines den Abbildungsfaktor bestimmenden Steuersignals (vscale) in Abhängigkeit von dem Inkrementsignal (vinc) umfassen,
**dass** die Phasenkorrekturmittel einen zweiten Schaltungsabschnitt (2) zur Erzeugung eines vertikalen Phasenkorrekturwerts (vphscor) in Abhängigkeit von dem Inkrementsignal (vinc) umfassen, und
**dass** die Phasenkorrekturmittel einen dritten Schaltungsabschnitt (3) zur Erzeugung des der Interpolationsstufe (4) zuzuführenden und einem Phasenoffset zwischen dem ersten Halbbild und dem zweiten Halbbild entsprechenden Phasenkorrektursignals (vphase) in Abhängigkeit von dem Steuersignal (vscale) des ersten Schaltungsabschnitts (1) und dem vertikalen Phasenkorrekturwert (vphscor) des zweiten Schaltungsabschnitts (2) umfassen.

**8.** Vorrichtung nach Anspruch 7,
**dadurch gekennzeichnet,**
**dass** der erste Schaltungsabschnitt (1) einen über ein Register (6) rückgekoppelten Addierer (14) umfasst, dem als Eingangssignal das Inkrementsignal (vinc) zugeführt ist.

**9.** Vorrichtung nach Anspruch 8,
**dadurch gekennzeichnet,**
**dass** im Rückkopplungspfad des rückgekoppelten Addierers des ersten Schaltungsabschnitts (1) ein Wertebereichsbegrenzer (5) angeordnet ist.

**10.** Vorrichtung nach einem der Ansprüche 7 - 9,
**dadurch gekennzeichnet,**
**dass** der zweite Schaltungsabschnitt eine Multiplexereinrichtung (7) und eine Bewertungseinrichtung (8) mit dem Bewertungsfaktor 1/2 umfasst,
wobei die Multiplexereinrichtung als Eingangssignale das Inkrementsignal (vinc) und den festen Wert "0" empfängt und von einem die Halbbildlage beschreibenden Steuersignal angesteuert wird, und
wobei das Ausgangssignal der Multiplexereinrichtung (7) über die Bewertungseinrichtung (8) dem dritten Schaltungsabschnitt (3) zugeführt ist.

**11.** Vorrichtung nach Anspruch 10,
**dadurch gekennzeichnet,**
**dass** der dritte Schaltungsabschnitt einen über ein Register (11) rückgekoppelten Addierer (9) umfasst, dem als Eingangssignal das den Abbildungsfaktor bestimmende Steuersignal (vscale) des ersten Schaltungsabschnitts (1) zugeführt ist,
wobei im Rückkopplungspfad des rückgekoppelten Addierers ein weiterer Addierer (10) angeordnet ist, dem als das Phasenkorrektursignal (vphscor) das Ausgangssignal der Bewertungseinrichtung (8) des zweiten Schaltungsabschnitts (2) zugeführt ist.

**Claims**

**1.** Method for the vertical phase correction of a vertically distorted digital image,
wherein the lines of the digital image are assigned to a first half-image and to a second half-image in accordance with an imaging factor (vscale) which changes in the vertical direction of the digital image, wherein the lines of the first half-image and the lines of the second half-image are to be displayed in temporal succession, and
wherein a vertical phase correction value (vphscor) which has to be taken into account when generating the second half-image from the digital image is generated for the second half-image as a function of the respective vertical position in the second half-image,
**characterised**
**in that** the vertical phase correction value (vphscor) for the second half-image is derived from information (vinc) about the change in the imaging factor (vscale) in the vertical direction of the digital image.

**2.** Method according to Claim 1,
**characterised**
**in that** the imaging factor (vscale) changes in a line-dependent manner in the vertical direction of the digital image, and
**in that** the vertical phase correction value (vphscor) is determined anew for each line of the second half-image.

**3.** Method according to Claim 1 or 2,
**characterised**
**in that** the vertical phase correction value (vphscor) for the half-image is determined as follows as a function of the value (vinc) which describes the vertical change in the imaging factor (vscale) in the vertical direction of the digital image: vphscor = ½ · vinc.

**4.** Method according to one of Claims 1 to 3,
**characterised**
**in that** the method for phase correction of a vertically distorted digital video image, in particular of a digital television image, is applied.

**5.** Device for vertical phase correction of a vertically distorted digital image,
comprising an interpolation stage (4), to which image data of a digital image are fed, for assigning the lines of the digital image to a first half-image and to a second half-image in accordance with an imaging factor (vscale) which changes in the vertical direction of the digital image, wherein the lines of the first half-image and the lines of the second half-image are to be displayed in temporal succession, and
comprising phase correction means (1-3) for generating a phase correction signal (vphase) for the interpolation stage (4), wherein the phase correction signal (vphase) is dependent on the respective vertical position in the second half-image and has to be taken into account by the interpolation stage (4) when generating the second half-image,
**characterised**
**in that** the phase correction means (1-3) are designed in such a way that they derive the phase correction signal (vphase) for the second half-image from an increment signal (vinc) which describes the change in the imaging factor (vscale) in the vertical direction of the digital image.

**6.** Device according to Claim 5,
**characterised**
**in that** the imaging factor (vscale) changes in a line-dependent manner in the vertical direction of the digital image, and
**in that** the phase correction means (1-3) are designed to generate the phase correction signal (vphase) anew for each line of the second half-image.

**7.** Device according to Claim 5 or 6,
**characterised**
**in that** the phase correction means comprise a first circuit section (1) for generating, as a function of the increment signal (vinc), a control signal (vscale) which determines the imaging factor,
**in that** the phase correction means comprise a second circuit section (2) for generating a vertical phase correction value (vphscor) as a function of the increment signal (vinc), and
**in that** the phase correction means comprise a third circuit section (3) for generating, as a function of the control signal (vscale) of the first circuit section (1) and the vertical phase correction value (vphscor) of the second circuit section (2), the phase correction signal (vphase) which is to be fed to the interpolation stage (4) and which corresponds to a phase offset between the first half-image and the second half-image.

**8.** Device according to Claim 7,
**characterised**
**in that** the first circuit section (1) comprises an adder (14) which is fed back through a register (6) and which is fed the increment signal (vinc) as input signal.

**9.** Device according to Claim 8,
**characterised**
**in that** a value range limiter (5) is arranged in the feedback path of the fed-back adder of the first circuit section (1).

**10.** Device according to one of Claims 7 to 9,
**characterised**
**in that** the second circuit section comprises a multiplexer device (7) and an evaluation device (8) with the evaluation factor 1/2,
wherein the multiplexer device receives as input signals the increment signal (vinc) and the fixed value "0" and is driven by a control signal which describes the half-image position, and
wherein the output signal of the multiplexer device (7) is fed via the evaluation device (8) to the third circuit section (3).

**11.** Device according to Claim 10,
**characterised**
**in that** the third circuit section comprises an adder (9) which is fed back through a register (11) and which is fed as input signal the control signal (vscale) of the first circuit section (1) which determines the imaging factor,
wherein a further adder (10) is arranged in the feedback path of the fed-back adder and is fed as phase correction signal (vphscor) the output signal of the evaluation device (8) of the second circuit section (2).

**Revendications**

**1.** Procédé destiné à la correction de phase d'une image numérique à distorsion verticale, selon lequel
on associe les lignes de l'image numérique à une première moitié d'image et à une deuxième moitié d'image suivant un facteur de reproduction (vscale) se modifiant dans la direction verticale de l'image numérique, les lignes de la première moitié d'image et celles de la deuxième moitié d'image devant être représentées en se succédant l'une l'autre dans le temps, et
pour la deuxième moitié d'image en fonction de la position verticale respective dans la deuxième moitié d'image, on génère une valeur de correction de phase verticale (vphscor) à prendre en compte lors de la génération de la deuxième moitié d'image à partir de l'image numérique,
**caractérisé en ce que**
la valeur de correction de phase verticale (vphscor) pour la deuxième moitié d'image est déduite d'une information (vinc) relative à la modification du facteur de reproduction (vscale) dans la direction verticale de l'image numérique.

**2.** Procédé selon la revendication 1,
**caractérisé en ce que**
le facteur de reproduction (vscale) se modifie dans la direction verticale de l'image numérique en fonction des lignes, et on recalcule la valeur de correction de phase verticale (vphscor) pour chaque ligne de la deuxième moitié d'image.

**3.** Procédé selon la revendication 1 ou 2,
**caractérisé en ce que**
la valeur de correction de phase verticale (vphscor) pour la moitié d'image est calculée comme suit en fonction de la valeur (vinc) qui décrit la modification verticale du facteur de reproduction (vscale) dans la direction verticale de l'image numérique : vphscor = ½ · vinc.

4. Procédé selon l'une quelconque des revendications 1 à 3,
**caractérisé en ce qu'**
on utilise le procédé pour la correction de phase d'une image vidéo numérique à distorsion verticale, notamment d'une image télévisuelle numérique.

5. Dispositif destiné à la correction de phase verticale d'une image numérique à distorsion verticale, comprenant :

un étage d'interpolation (4) recevant des données d'une image numérique servant à l'association des lignes de l'image numérique suivant un facteur de reproduction (vscale) se modifiant dans la direction verticale de l'image numérique pour une première et une deuxième moitié d'image, les lignes de la première moitié d'image et celles de la deuxième moitié devant être représentées en se succédant l'une l'autre dans le temps, et
des moyens de correction de phase (1 à 3) destinés à créer un signal de correction de phase (vphase) pour l'étage d'interpolation (4), le signal de correction de phase (vphase) dépendant de la position verticale respective dans la deuxième moitié d'image et devant être pris en compte par l'étage d'interpolation (4) lors de la génération de la deuxième moitié d'image,

**caractérisé en ce que**
les moyens de correction de phase (1 à 3) sont conçus de manière à déduire le signal de correction de phase (vphase) pour la deuxième moitié d'image, à partir d'un signal incrémental (vinc) décrivant la modification du facteur de représentation (vscale) dans la direction verticale de l'image numérique.

6. Dispositif selon la revendication 5,
**caractérisé en ce que**
le facteur de représentation (vscale) se modifie dans la direction verticale de l'image numérique en fonction des lignes, et les moyens de correction de phase (1 à 3) sont conçus pour recréer le signal de correction de phase (vphasc) pour chaque ligne de la deuxième moitié d'image.

7. Dispositif selon la revendication 5 ou 6,
**caractérisé en ce que**
les moyens de correction de phase comprennent un premier segment de commutation (1) pour créer un signal de commande (vscale) déterminant le facteur de reproduction en fonction du signal incrémental (vinc), les moyens de correction de phase comprennent un deuxième segment de commutation (2) pour générer une valeur de correction de phase verticale (vphscor) en fonction du signal incrémental (vinc), et
les moyens de correction de phase comprennent un troisième segment de commutation (3) pour générer le signal de correction de phase (vphase), correspondant à un décalage de phase entre la première et la deuxième moitié d'image et menant à l'étage d'interpolation (4), en fonction du signal de commande (vscale) du premier segment de commutation (1) et de la valeur de correction de phase verticale (vphscor) du deuxième segment de commutation (2).

8. Dispositif selon la revendication 7,
**caractérisé en ce que**
le premier segment de commutation (1) comprend un additionneur (14) rétroactif par un registre (6) et recevant le signal incrémental (vinc) comme signal d'entrée.

9. Dispositif selon la revendication 8,
**caractérisé par**
un limiteur de plage de valeurs (5) disposé dans le chemin de réinjection de l'additionneur rétroactif du premier segment de commutation (1).

10. Dispositif selon l'une quelconque des revendications 7 à 9,
**caractérisé en ce que**
le deuxième segment de commutation comprend un dispositif de multiplexage (7) et un dispositif d'exploitation (8) avec le facteur d'exploitation 1/2,
le dispositif de multiplexage recevant comme signaux d'entrée le signal incrémental (vinc) et la valeur fixe « 0 », est commandé par un signal de commande décrivant la position de la moitié d'image, et

le signal de sortie du dispositif de multiplexage (7) est amené au troisième segment de commutation (3) par le dispositif d'exploitation (8).

11. Dispositif selon la revendication 10,
    **caractérisé en ce que**
    le troisième segment de commutation comprend un additionneur (9) rétroactif par un registre (11) et recevant comme signal de commande le signal de commande du premier segment de commutation (1) déterminant le facteur de reproduction (vscale), et un autre additionneur (10) recevant le signal de sortie du dispositif d'exploitation (8) du deuxième segment de commutation (2) comme signal de correction de phase (vphscor) est disposé dans le chemin de réinjection de l'additionneur rétroactif.

## FIG 1

vinc (I)

1 — Panorama-generator

2 — Phasenkorrektur-schaltung

vscale (I)

3 — Interpolations-phasengenerator

vphscor (I)

vphase (I)

4 — Interpolationstufe zur Zeilenberechnung

Eingangsdaten ⟶

⟶ Ausgangsdaten

FIG 2

# FIG 3A

| Daten-akquisition | → | Einheit zur vertikalen Bildverzerrung | → | Bildspeicher |
|---|---|---|---|---|
| 101 | | 100 | | 102 |

# FIG 3B

| Vollbildspeicher | → | Einheit zur vertikalen Bildverzerrung | → | Einheit zur Bilddarstellung im Zeilensprung-verfahren |
|---|---|---|---|---|
| 103 | | 100 | | 104 |

# FIG 4

| Zeilen des Vollbildes | Zeilen des 1. Halbbildes | Zeilen des 2. Halbbildes |
|---|---|---|

1 ──────── → 1 ────────────────────────────── 

2 ──────────────────────────── → 2 ──────────  PHS

3 ──────── → 3 ──────────

4 ──────────────────────────── → 4 ──────────

5 ──────── → 5 ──────────

6 ──────────────────────────── → 6 ──────────

7 ──────── → 7 ──────────

8 ──────────────────────────── → 8 ──────────